(19) Europäisches Patentamt
European Patent Office
Office européen des brevets

(11) Veröffentlichungsnummer: **0 143 959**
**B1**

(12) # EUROPÄISCHE PATENTSCHRIFT

(45) Veröffentlichungstag der Patentschrift: **07.01.87**

(51) Int. Cl.⁴: **C 08 L 55/02**, C 08 F 279/02

(21) Anmeldenummer: **84112498.5**

(22) Anmeldetag: **17.10.84**

(54) **ABS-Formmassen mit verbesserter Brandfestigkeit.**

(30) Priorität: **29.10.83 DE 3339353**

(43) Veröffentlichungstag der Anmeldung:
**12.06.85 Patentblatt 85/24**

(45) Bekanntmachung des Hinweises auf die Patenterteilung:
**07.01.87 Patentblatt 87/2**

(84) Benannte Vertragsstaaten:
**DE FR GB IT**

(56) Entgegenhaltungen:
**US - A - 3 271 355**

(73) Patentinhaber: **BAYER AG, Konzernverwaltung RP Patentabteilung, D-5090 Leverkusen 1 Bayerwerk (DE)**

(72) Erfinder: **Zabrocki, Karl, Dr., Edelfalter 33, D-4044 Büttgen (DE)**
Erfinder: **Müller, Friedemann, Dr., Am Steinacker 5, D-4040 Neuss 21 (DE)**
Erfinder: **Döring, Joachim, Dr., Silesiusstrasse 78, D-5000 Köln 80 (DE)**

**EP 0 143 959 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ABS-Formmassen auf Basis spezieller Copolymerisate und gegebenenfalls Pfropfpolymerisate aus für die ABS-Herstellung geeigneten olefinisch ungesättigten Monomeren und zur Copolymerisation befähigten Silicium-Derivaten, die in ihrem Brandverhalten gegenüber üblichen ABS-Materialien verbessert sind.

ABS-Formmassen sind Zweiphasenkunststoffe aus:

I. einem oder mehreren thermoplastischen Copolymerisaten aus Styrol und Acrylnitril, wobei das Styrol ganz oder teilweise durch α-Methylstyrol, kernsubstituierte Styrole, Methylmethacrylat, Maleinsäureanhydrid oder gegebenenfalls substituiertes Maleimid ersetzt werden kann. Dieses Copolymerisat, auch als SAN-Harz oder Matrix-Harz bezeichnet, bildet die äussere kontinuierliche Phase;

II. mindestens einem Propfpolymerisat, welches hergestellt worden ist durch Pfropfreaktion eines oder mehrerer der unter I. genannten Monomeren aus ein kautschukartiges Polymer («Pfropfgrundlage»). Dieses Pfropfpolymerisat, auch «Elastomerphase» oder «Pfropfkautschuk», bildet die disperse diskontinuierliche Phase.

ABS-Formmassen werden in grossem Umfang zur Herstellung von Formteilen, z.B. Kfz-Innenteilen, Gebrauchsgegenständen und Gehäusen verwendet. Ein Nachteil ist ihre Brennbarkeit, die ihre Anwendung für thermisch beanspruchte Teile, z.B. Gehäuse für Phono- und Fernsehgeräte, einschränkt. Zur Erhöhung der Flammfestigkeit von ABS- Formmassen kann man anorganische Oxide, z.B. Antimonoxid und halogenhaltige Additive, z.B. Octabromdiphenylether zusetzen. Diese Additive sind jedoch erst in Mengen von 5 bis 30 Gew.-%, bezogen auf Formmassen, wirksam und beeinträchtigen die mechanische Festigkeit der Massen stark.

Es wurde gefunden, dass man die Brennbarkeit von ABS-Polymerisaten durch Einpolymerisieren mindestens eines Silan-Gruppen tragenden Monomers wesentlich reduzieren kann.

Gegenstand der vorliegenden Erfindung sind ABS-Formmassen, die im wesentlichen bestehen aus:

I. 90-30 Gew.-% (bezogen auf Summe I+II) eines oder mehrerer thermoplastischer Copolymerisate aus

Ia) 65-80 Gew.-% (bezogen auf Summe Ia+Ib+Ic) Styrol, α-Methylstyrol, kernalkylierte Styrole, Vinyltoluol, p-Methylstyrol, Halogenstyrole, Maleinsäureanhydrid, gegebenenfalls substituiertes Maleinimid, Methylmethacrylat oder Mischungen daraus,

Ib) 35-20 Gew.-% (bezogen auf Summe Ia+Ib+Ic) Acrylnitril und/oder Methacrylnitril,

Ic) 0,01 bis 1,0 Gew.-% (bezogen auf Summe Ia+Ib+Ic) mindestens einer copolymerisierbaren Silan-Verbindung;

II. 10-70 Gew.-% (bezogen auf Summe I+II)eines oder mehrerer Pfropfpolymerisate, erhältlich durch Polymerisation der unter Ia bis Ic genannten Monomeren in Gegenwart mindestens eines Kautschuks.

In dem Pfropfpolymerisat II kann ein Monomer aus der Gruppe Ia allein pfropfpolymerisiert sein. In diesem Fall ist Styrol bevorzugt. Es kann auch ein Gemisch von Monomeren der Gruppen Ia und Ib – bevorzugt 90 bis 50 Gew.-% Ia und 50 bis 10 Gew.-% Ib – eingesetzt werden. In diesem Fall ist ein Gemisch aus Styrol und Acrylnitril bevorzugt. Schliesslich kann man auch eine Kombination der Monomeren Ia, Ib und Ic in den unter I angegebenen Mengen einsetzen.

Von den einen Hauptbestandteil bildenden Monomeren Ia und Ib können solche mit mehrfach substituierter Doppelbindung eingesetzt werden, wenn man Formmassen mit erhöhter Wärmestandfestigkeit herstellen will, z.B. α-Methylstyrol, Maleinimid, Methacrylnitril. Für besonders gut verarbeitbare, leicht fliessende Formmassen eignen sich Styrol/Acrylnitril-Copolymere besser. Ein ausgewogenes Verhältnis beider Materialeigenschaften erreicht man z.B. mit Kombinationen aus Styrol/Acrylnitril, p-Methylstyrol/Acrylnitril, Methylmethacrylat/Styrol/Acrylnitril.

Bevorzugt sind Kombinationen aus Styrol/Acrylnitril und α-Methylstyrol/Acrylnitril.

Die erfindungsgemäss mitzupolymerisierenden Monomeren Ic enthalten einerseits zur Copolymerisation befähigte Kohlenstoff-Doppelbindungen und andererseits eine vorzugsweise substituierte Silan-Einheit. Geeignete Verbindungen besitzen beispielsweise die Strukturen I und II:

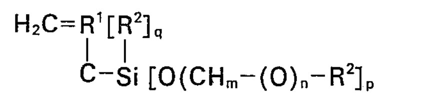

(I)

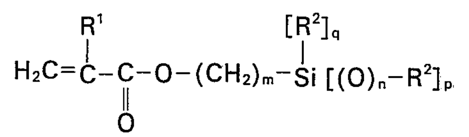

(II)

mit $m = 1$ bis 3  $R^1 = H, CH_3$
$n = 0$ und 1  $R^2 = C_1$-$C_4$-Alkyl
$p = 1$ bis 3
$q = 3-p$

Hierbei haben sich die Verbindungen II als besonders günstig im Copolymerisationsverhalten erwiesen, wobei γ-Methacryloxypropyltrimethoxisilan besonders hervorzuheben ist.

Das Einsatz-Mengenverhältnis der 3 Monomeren Ia, Ib und Ic liegt erfindungsgemäss bei
65-80 Gew.-% Ia
35-20 Gew.-% Ib
0,05-1,0 Gew.-% Ic
Bevorzugt ist
60-75 Gew.-% Ia
32-25 Gew.-% Ib
0,1-0,4 Gew.-% Ic

Kleinere Mengen von Ic sind für den Flammschutz nur ungenügend wirksam, grössere Mengen können zu drastischen Einbussen im mechanischen Verhalten führen.

Die Pfropfpolymerisate II kann man herstellen durch Polymerisation von Monomeren Ia oder Ia+Ib oder Ia+Ib+Ic in Gegenwart mindestens eines Kautschuks. Als Kautschuke («Pfropfgrundlage») kommen sämtliche für ABS übliche Materialien in Betracht, z.B. Polybutadien, Butadien/Styrol-Copolymerisate; Butadien/Acrylnitril-Copolymerisate, Polybutylacrylat-homo- und Copolymerisate.

Die genannten Monomeren werden in Gegenwart dieser Pfropf-Grundlagen polymerisiert und pfropfen dabei ganz oder zum Teil auf. Pfropfpolymerisate II, die in Gegenwart von Monomergemischen Ia+Ib bzw. Ia+Ib+Ic hergestellt werden, erreichen im allgemeinen höhere Zähigkeiten und sind daher bevorzugt.

Das Massenverhältnis der polymerisierten Monomeren zum Kautschuk-Feststoffanteil liegt in der Regel bei 95:5 bis 10:90, vorzugsweise 60:40 bis 30:70.

Die Pfropfpolymerisate II enthalten somit 95 bis 10 Gew.-% Kautschuk und 5 bis 90 Gew.-% der polymerisierten Monomeren, bevorzugt 60 bis 30 Gew.-% Kautschuk und 40 bis 70 Gew.-% der pfropfpolymerisierten Monomeren.

Für die Herstellung der Harzpolymerisate I wie auch der Pfropfpolymerisate II kommen alle üblichen Polymerisationstechniken wie Massepolymerisation, Lösungspolymerisation, Emulsionspolymerisation in Betracht. Eine eingehendere Beschreibung der Verfahren findet sich in Ullmanns Encyklopädie der technischen Chemie (Band *19*, Seite 277-95; Verlag Chemie, 1980).

Bevorzugt hierbei sind die Massepolymerisation und die Emulsionspolymerisation; bei der Herstellung von Emulsions-Pfropfpolymerisaten geht man aus von Kautschukgrundlagen, die bereits in Form wässriger Latices vorliegen.

Die erfindungsgemässen Harze I sind im allgemeinen gut löslich in organischen Lösungsmitteln und besitzen durchschnittliche Molgewichte von $6 \cdot 10^3$ bis $10^6$, vorzugsweise $10^4$ bis $2 \cdot 10^5$.

Die Pfropfpolymerisate II sind nur teilweise löslich. Sie weisen bevorzugt Pfropfgrade G von 0,3 bis 1,0 auf, wobei der Pfropfgrad in der DE-AS 2 420 358 definiert ist.

Die Harzpolymerisate I können mit den Pfropfpolymerisaten II entweder in «nassem» Zustand, d.h. als Lösung, Aufschlämmung oder Emulsion oder in «trockenem» Zustand,d.h. als Pulver, Granulat oder Schmelze gemischt werden, wobei sich im letzteren Fall eine für Thermoplaste übliche Durchmischung in Knetern, Schneckenmaschinen, Walzenstühlen oder anderen für die Thermoplastverarbeitung üblichen Maschinen anschliesst. Vor und/oder nach der Mischung können übliche Additive wie Stabilisatoren, Gleitmittel, Antistatika, Füllstoffe, Pigmente etc. zugesetzt werden.

Die technische Weiterverarbeitung der fertigen ABS-Materialien geschieht vorzugsweise nach den Methoden der Thermoplastverarbeitung wie Granulierung, Spritzguss, Extrusion, Kalandrierung, Pressung, Blasverformung.

Die erfindungsgemässen ABS-Formmassen zeichnen sich aus durch wesentlich verbesserte Flammwidrigkeit bei gleichzeitig guten mechanischen Eigenschaften und guter Wärmeformbeständigkeit.

Die folgenden Beispiele erläutern die Erfindung. Die angegebenen Mengen sind Gewichtsteile.

*Herstellung der Harzpolymerisate*

In eine gerührte Vorlage aus 6000 g entsalztem Wasser und 8 g eines mit NaOH alkalisch eingestellten Harzsäure-Emulgators gibt man nach sorgfältigem Spülen mit $N_2$ und Aufheizen auf 65° C eine Lösung von 650 g Wasser und 21 g Kaliumpersulfat. Dann gibt man in mehreren Zuläufen die aus Tab. 1 ersichtlichen Monomergemische sowie über eine Dosierzeit von 4 Stunden eine Lösung aus 1750 g $H_2O$ und 192 g alkalisch eingestellter Harzsäure hinzu. Nach dem Ende der Zuläufe wird 4 Stunden bei 65° C nachgerührt.

*Tabelle 1* (Gewichtsangaben in g)

| Harz | Zulauf 1 | | | | Zulauf 2 | | | | Summarische Zusammensetzung (%) | | |
|---|---|---|---|---|---|---|---|---|---|---|---|
| | Styrol | Acrylnitril | Silan | Dosierdauer | Styrol | Acrylnitril | t-Dodecylmercaptan | Dosierdauer | Styrol | Acrylnitril | Silan |
| A | 2504,6 | 974,4 | 21,0 | 3 Std. | 2520,0 | 980,0 | 15,4 | 4 Std. | 71,78 | 27,92 | 0,3 |
| B | 2499,7 | 972,3 | 28,0 | 3 Std. | 2520,0 | 980,0 | 15,4 | 4 Std. | 71,71 | 27,89 | 0,4 |
| C | — | — | — | — | 5040,0 | 1960,0 | 15,4 | 4 Std. | 72,00 | 28,00 | — |

Als Silan wurde α-Methacryloxypropyltrimethoxisilan verwendet.

*Herstellung der Pfropfpolymerisate*

Eine gerührte Vorlage von 1250 g (gerechnet als Feststoff) eines Polybutadienlatex mit einem mittleren Teilchendurchmesser von 0,4 µm, die mit Wasser auf 20% Feststoff verdünnt wurde, heizt man unter Spülen mit $N_2$ auf ca. 65° C auf, gibt eine Lösung aus 300 g $H_2O$ und 12,5 g Kaliumpersulfat zu und dosiert anschliessend über 4 Stunden 1250 g eines Monomerengemisches laut Tabelle 2 sowie eine alkalisch eingestellte Lösung aus 625 g Wasser und 71,25 g Harzsäure zu. Man lässt nach Dosierende weitere 4 Stunden bei 65-70° C abreagieren.

*Tabelle 2* (Gewichtsangaben in g)

| Pfropf | Zulauf 1 | | | | Zulauf 2 | | | Zusammensetzung des Pfropfpolymerisats (%) | | | |
|---|---|---|---|---|---|---|---|---|---|---|---|
| | Styrol | Acryl-nitril | Silan | Dosier-dauer | Styrol | Acryl-nitril | Dosier-dauer | Poly-buta-dien | Styrol | Acryl-nitril | Silan |
| D | 447,25 | 174,0 | 3,75 | 3 Std. | 450 | 175 | 4 Std. | 50 | 35,89 | 13,96 | 0,15 |
| E | 446,50 | 173,50 | 5,00 | 3 Std. | 450 | 175 | 4 Std. | 50 | 35,86 | 13,94 | 0,20 |
| F | — | — | — | — | 900 | 350 | 4 Std. | 50 | 36,00 | 14,00 | — |

Als Silan wurde α-Methacryloxypropyltrimethoxisilan verwendet.
Die Harze und Pfropfpolymerisate wurden nach Zugabe eines Stabilisators separat durch Salzzusatz ausgefällt, gewaschen und getrocknet.

*Herstellung und Prüfung der ABS-Compounds*

Die in Tabelle 3 angegebenen Materialien wurden zusammen mit 2 Gew.-% Ethylendiaminbisstearoylamid-Wachs auf einem Innenkneter abgemischt, zu Prüfkörpern abgespritzt und ihre Brenngeschwindigkeit nach VDE 0860 HF gemessen. Tabelle 3 fasst die Beispiele, Vergleichsversuche und Prüfdaten zusammen.

*Tabelle 3:* Materialien, Einsatzmengen, Prüfdaten

| Versuch/Beispiel | Harzphase | Propfpolymerisat | Brenngeschwindigkeit (mm/min) |
|---|---|---|---|
| Vergleichsversuch | | | |
| a | 60 Harz C | 40 Pfropf F | 43 |
| b | 80 Harz C | 20 Pfropf F | 44 |
| Beispiel 1 | 60 Harz A | 40 Pfropf D | 38 |
| 2 | 60 Harz A | 40 Pfropf F | 36 |
| 3 | 60 Harz B | 40 Pfropf F | 33 |
| 4 | 60 Harz B | 40 Pfropf D | 37 |
| 5 | 80 Harz B | 20 Pfropf F | 29 |
| 6 | 80 Harz A | 20 Pfropf E | 36 |
| 7 | 80 Harz A | 20 Pfropf F | 37 |
| 8 | 80 Harz B | 20 Pfropf F | 27 |

## Patentansprüche

1. Formmassen aus

I. 90-30 Gew.-% (bezogen auf Summe I+II) eines oder mehrerer thermoplastischer Copolymerisate aus

Ia) 65-80 Gew.-% (bezogen auf Summe Ia+Ib+Ic) Styrol, α-Methylstyrol, kernalkylierte Styrole, Vinyltoluol, p-Methylstyrol, Halogenstyrol, Maleinsäureanhydrid, gegebenenfalls substituiertes Maleinimid, Methylmethacrylat oder Mischungen daraus,

Ib) 35-20 Gew.-% (bezogen auf Summe Ia+Ib+Ic) Acrylnitril und/oder Methacrylnitril,

Ic) 0,01 bis 1,0 Gew.-% (bezogen auf Summe Ia+Ib+Ic) mindestens einer copolymerisierbaren Silanverbindung und

II. 10-70 Gew.-% (bezogen auf Summe I+II) eines oder mehrerer Pfropfpolymerisate, erhältlich durch Polymerisation der unter Ia bis Ic genannten Monomeren in Gegenwart von mindestens einem Kautschukpolymeren.

2. Formmassen gemäss Anspruch 1, dadurch gekennzeichnet, dass die Silan-Verbindung Ic der Formel I oder Formel II entspricht

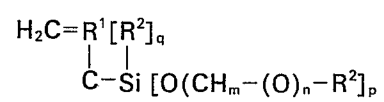

(I)

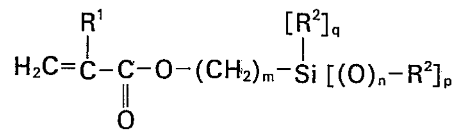

(II)

mit m = 1 bis 3 $R^1$ = H, $CH_3$
n = 0 oder 1 $R^2$ = $C_1$-$C_4$-Alkyl
p = 1 bis 3
q = 3−p

3. Formmassen gemäss Ansprüchen 1 und 2, dadurch gekennzeichnet, dass die Verbindung Ic in Mengenanteilen von 0,1 bis 0,4 Gew.-% (bezogen auf Summe Ia+Ib+Ic) eingesetzt wird.

4. Formmassen gemäss Ansprüchen 1 bis 3, dadurch gekennzeichnet, dass die Verbindung Ic γ-Methacryloxypropyltrimethoxisilan ist.

5. Formmasse nach Anspruch 1, dadurch gekennzeichnet, dass das Pfropfpolymerisat II 95 bis 10 Gew.-% Kautschuk und 5 bis 90 Gew.-% der pfropfpolymerisierten Monomeren enthält, die ihrerseits aus den Monomeren Ia oder einem Gemisch der Monomeren Ia und Ib im Mengenverhältnis von 90 bis 50 Gew.-% Ia und 10 bis 50 Gew.-% Ib oder aus einem Gemisch der Monomeren Ia, Ib und Ic in den unter I angegebenen Mengenverhältnissen bestehen.

## Claims

1. Moulding compositions of

I. 90-30% by weight (based on the sum of I+II) of one or more thermoplastic copolymers of

Ia) 65-80% by weight (based on the sum of Ia+Ib+Ic) of styrene, α-methylstyrene, nuclear-alkylated styrenes, vinyl toluene, p-methylstyrene, halogeno-styrene, maleic anhydride, optionally substituted maleinimide, methyl methacrylate or mixtures thereof,

Ib) 35-20% by weight (based on the sum of Ia+Ib+Ic) of acrylonitrile and/or methacrylonitrile,

Ic) 0.01 to 1.0% by weight (based on the sum of Ia+Ib+Ic) of at least one copolymerisable silane compound and

II. 10-70% by weight (based on the sum of I+II) of one or more graft polymers, obtainable by polymerisation of the monomers mentioned under Ia to Ic in the presence of at least one rubber polymer.

2. Moulding compositions according to Claim 1, characterised in that the silane compound Ic corresponds to the formula I or the formula II

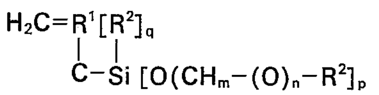
(I)

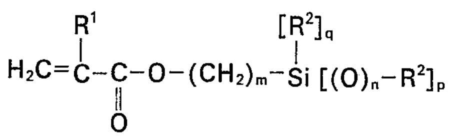
(II)

in which m = 1 to 3  $R^1$ = H, $CH_3$
n = 0 or 1  $R^2$ = $C_1$-$C_4$-Alkyl
p = 1 to 3
q = 3−p

3. Moulding compositions according to Claims 1 and 2, characterised in that the compound Ic is used in quantities of 0.1 to 0.4% by weignt (based on the sum of Ia+Ib+Ic).

4. Moulding compositions according to Claims 1 to 3, characterised in that the compound Ic is γ-methacryloxypropyltrimethoxysilane.

5. Moulding composition according to Claim 1, characterised in that the graft polymer II contains 95 to 10% by weight of rubber and 5 to 90% by weight of the graftpolymerised monomers which in turn consist of the monomers Ia or a mixture of the monomers Ia and Ib in a quantitative ratio of 90 to 50% by weight of Ia and 10 to 50% by weight of Ib or of a mixture of the monomers Ia, Ib and Ic in the quantitative proportions mentioned under I.

## Revendications

1. Matières à mouler consistant en:

I. 90 à 30% en poids (par rapport à la somme I+II) d'un ou plusieurs copolymères thermoplastiques de

Ia) 65 à 80% en poids (par rapport à la somme Ia+Ib+Ic) de styrène, d'α-méthylstyrène, de styrènes alkylés au noyau, de vinyltoluène, de p-méthylstyrène, d'halogénostyrène, d'anhydride maléique, de maléimide éventuellement substitué, de méthacrylate de méthyle ou leurs mélanges,

Ib) 35 à 20% en poids (par rapport à la somme Ia+Ib+Ic) d'acrylonitrile et/ou de méthacrylonitrile,

Ic) 0,01 à 1,0% en poids (par rapport à la somme Ia+Ib+Ic) d'au moins un composant du type silane copolymérisable;

II. 10 à 70% en poids (par rapport à la somme I+II) d'un ou plusieurs polymères greffés, qui peuvent être obtenus par polymérisation des monomères mentionnés sous Ia) à Ic) en présence d'au moins un polymère caoutchouteux.

2. Matières à mouler selon la revendication 1, caractérisées en ce que le composé du type silane Ic correspond à la formule I ou à la formule II:

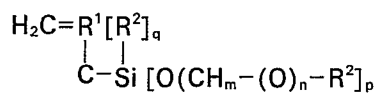
(I)

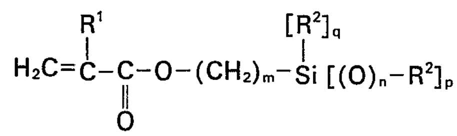
(II)

où m = 1 à 3  $R^1$ = H, $CH_3$
n = 0 ou 1  $R^2$ = alkyle en $C_1$-$C_4$
p = 1 à 3
q = 3−p

3. Matières à mouler selon les revendications 1 et 2, caractérisées en ce que le composé Ic est utilisé en proportions de 0,1 à 0,4% en poids (par rapport à la somme Ia+Ib+Ic).

4. Matières à mouler selon les revendications 1 à 3, caractérisées en ce que le composé Ic est le γ-méthacryloxypropyltriméthoxysilane.

5. Matière à mouler selon la revendication 1, caractérisée en ce que le polymère greffé II contient 95 à 10% en poids de caoutchouc et 5 à 90% en poids des monomères polymérisés par greffage, qui consistent à leur tour en les monomères Ia ou en un mélange des monomères Ia et Ib dans les proportions de 90 à 50% en poids de Ia et 10 à 50% en poids de Ib ou en un mélange des monomères Ia, Ib et Ic dans les proportions indiquées sous I.